Europäisches Patentamt

European Patent Office

Office européen des brevets

(11) Veröffentlichungsnummer: **0 262 424**
**B1**

(12) **EUROPÄISCHE PATENTSCHRIFT**

(45) Veröffentlichungstag der Patentschrift:
**07.11.90**

(21) Anmeldenummer: **87112703.1**

(22) Anmeldetag: **01.09.87**

(51) Int. Cl.⁵: **F27B 9/20,** F27D 3/02,
B65G 25/02

(54) **Gleichschrittofen für die Wärmebehandlung von Blechen.**

(30) Priorität: **01.10.86 DE 3633374**

(43) Veröffentlichungstag der Anmeldung:
**06.04.88 Patentblatt 88/14**

(45) Bekanntmachung des Hinweises auf die Patenterteilung:
**07.11.90 Patentblatt 90/45**

(84) Benannte Vertragsstaaten:
**DE ES FR SE**

(56) Entgegenhaltungen:
**DE-A- 2 151 637**
**DE-B- 1 221 260**
**FR-A- 1 552 914**
**FR-A- 2 116 136**

(73) Patentinhaber: **Ruhrgas Aktiengesellschaft,**
**Huttropstrasse 60 Postfach 10 32 52,**
**D-4300 Essen 1(DE)**

(72) Erfinder: **Fleck, Edgar, Schlossstrasse 4,**
**D-4300 Essen 11(DE)**

(74) Vertreter: **Louis, Walter, Dipl.-Ing. et al, Patentanwälte**
**Dipl.-Ing. Walter Louis Dipl.-Ing. Günter Louis**
**Stubertal 3, D-4300 Essen 1(DE)**

ACTORUM AG

## Beschreibung

Die Erfindung bezieht sich auf einen Industrieofen für die Wärmebehandlung von Blechen, mit einer Transportvorrichtung aus zwei in Ofenlängsrichtung sich erstreckenden Balkengruppen, gemäß dem Oberbegriff des Patentanspruchs 1.

Gegenüber einem Wärmebehandlungsofen für Bleche mit einer Rollen-Transportvorrichtung, bei dem durch Reiben oder Scheuern des Bleches auf den Transportrollen Pickel oder Kratzer auf der Blechoberfläche entstehen können, eignet sich der Industrieofen mit Balken-Transportvorrichtung bevorzugt für ein pickelfreies Normalisieren und Anlassen von Blechen. Während manche Industrieöfen dieser Art, beispielsweise der aus der DE-B-1 221 260 oder FR-A 2 116 136 bekannte Hubbalkenofen, für den schrittweisen Transport eine angetriebene und eine feststehende Balkengruppe haben, sind bei dem vielfach für die Wärmebehandlung von Blechen angewendeten sogenannten Gleichschrittofen die abwechselnd nebeneinander liegenden Balken beider Balkengruppen angetrieben. Schwierigkeiten bereitet beim Transport mittels Balken die Auflagemöglichkeit auf den Balken für schmale Bleche. Die Grenze des Transportes von schmalen Blechen ergibt sich daraus, daß das Blech auf den jeweils tragenden Balken der einen oder anderen Balkengruppe nicht zur Seite durch Überhang und Übergewicht abkippen darf. Bei den bisher in der Praxis gebräuchlichen Gleichschrittöfen hat die Grenze bei einer Blechbreite von mindestens etwa 1260 mm gelegen. Der Boden eines herkömmlichen Gleichschrittofens ist in mehrere balkenförmige Bodenteile unterteilt. Auf jedem Bodenteil ist mit einer Stütze jeweils ein eigentlicher Transportbalken angeordnet, damit das Blech für eine sogenannte Unterbeheizung durch direkte Wärmebeaufschlagung der Blechunterseite in einem Abstand vom Ofenboden getragen und weitertransportiert wird. Unter den Bodenteilen befinden sich die mechanischen Einrichtungen, die die vertikale und die in Ofenlängsrichtung horizontale Bewegung der einzelnen Bodenteile nebst deren Transportbalken bewirken. Ferner befinden sich unter den Lücken zwischen den Bodenteilen Wassertassen, in die die Bodenteile während ihrer Bewegungen mit Schürzen eintauchen, um den Ofenboden nach unten gasdicht zu verschließen. Hauptsächlich auch wegen dieser erforderlichen Einrichtungen eines Gleichschrittofens ist die Anzahl von Bodenteilen mit jeweils einem darauf angeordneten Transportbalken, die sich konstruktiv über die Ofenbreite unterbringen läßt, begrenzt. So hat zum Beispiel ein konventioneller Gleichschrittofen mit einer Ofenbreite von etwa 4 m für Blechbreiten bis zu etwa 3,5 m acht Bodenteile, das heißt zwei Balkengruppen mit je vier Transportbalken, die mit einer herkömmlichen Balkenteilung von etwa 420 mm über die Ofenbreite verteilt sind. Die von den Stützen getragenen Transportbalken bestehen aus Gußkörpern, die an ihrer Oberseite als Auflage für das Blech eingesetzte Steine enthalten, die schmaler als die Gußkörper sind und von den Gußkörpern seitlich eingefaßt werden. Für die Unterbeheizung, das heißt damit eine ausreichende Wärmebestrahlung der Blechunterseite durch den Ofenboden stattfinden kann, ist ein ausreichend breiter freier Abstand zwischen den Balken, das heißt zwischen deren Gußkörpern, erforderlich. Hieraus entstand in der Praxis im Zusammenhang mit der aus konstruktiven Gründen gebräuchlichen Balkenteilung von etwa 420 mm eine Balkenbreite von 240 mm für die Gußkörper der Balken und ein freier Abstand zwischen den Gußkörpern um 180 mm. Für einen einwandfreien Blechtransport besteht die Anforderung, daß das Blech immer auf wenigstens zwei Balken der jeweils tragenden Balkengruppe aufliegt, wobei die Blechränder tunlichst bis zur Mitte der Balkenbreite des den Blechrand tragenden Balkens reichen sollen, damit der Blechrand mit ausreichender Breite auf den Steinen des Balkens aufliegt, das heißt tunlichst auf der halben Breite des Steins aufliegt. Aus den vorerwähnten konstruktiven Gründen und Anforderungen ergibt sich, dan die Blechbreite wenigstens das Dreifache der Balkenteilung betragen muß und bei der gebräuchlichen Balkenteilung von etwa 420 mm nicht schmaler als etwa 1260 mm sein kann, was in dieser Größenordnung von der Praxis auch als untere Grenze der Blechbreite für einen noch einwandfreien Blechtransport in konventionellen Gleichschrittöfen angegeben wird.

Die Erfindung hat zur Aufgabe, bei einem Industrieofen der eingangs genannten Art einen sicheren Blechtransport mittels der Transportbalken auch noch bei Blechbreiten zu ermöglichen, die unter dem durch die herkömmliche Ofenkonstruktion bedingten und bisher in der Praxis als untere Grenze bezeichneten Maß von etwa 1260 mm liegen und bei der gebräuchlichen Balkenanordnung mit einer Balkenteilung um 420 mm bis auf eine Blechbreite von rund 1000 mm herunter reichen können.

Diese Aufgabe wird gemäß der Erfindung in überraschend einfacher Weise mit den im kennzeichnenden Teil des Patentanspruchs 1 angegebenen Merkmalen gelöst. Durch diese Doppelbalkenausbildung eines Balkens von einer Balkengruppe hat ein Blech, wenn sich die beiden Nachbarbalken der anderen Balkengruppe senken, auch dann eine kippsichere Auflage auf zwei voneinander distanzierten Balken, wenn die Blechbreite nur von der Mitte des einen Nachbarbalkens bis zur Mitte des anderen Nachbarbalkens reicht, das heißt wenn die Blechbreite nur das Zweifache der Balkenteilung beträgt. Beispielsweise mit Hilfe eines Anschlages, an den das Blech mit einem Blechrand angelegt wird, kann das Blech gezielt so auf die Balken aufgelegt werden, daß die Blechränder mit Sicherheit und gleichmäßig auf den beiden Nachbarbalken des Doppelbalkens aufliegen. Durch die Doppelbalkenausbildung bleiben andererseits aber auch zwischen den beiden benachbarten Normalbalken der anderen Balkengruppe genügend freie Lücken beziehungsweise Abstände erhalten, durch die hindurch eine ausreichende Unterbeheizung des Bleches durch den Ofenboden stattfinden kann. Der Abstand zwischen den Einzelbalken des Doppelbalkens und den Nachbarbalken kann möglichst klein bemessen sein und braucht im wesentlichen nur auszureichen, um mit Rücksicht auf übliche Ofen- und Balkenlängen von etwa 70 m ein Anstoßen der Einzelbalken an die Nachbarbalken während der Bewegung der Balkengruppen relativ zueinander mit Sicherheit auszuschließen, so daß hierdurch die Blechabstützungen durch die beiden Einzelbalken des Doppelbalkens so nah wie möglich an die Blechabstützungen durch die beiden benachbarten Normalbalken herangerückt sind, wobei die Unterbeheizung durch den entsprechend sich vergrößernden Abstand zwischen den beiden Einzelbalken des Doppelbalkens wirksamer wird.

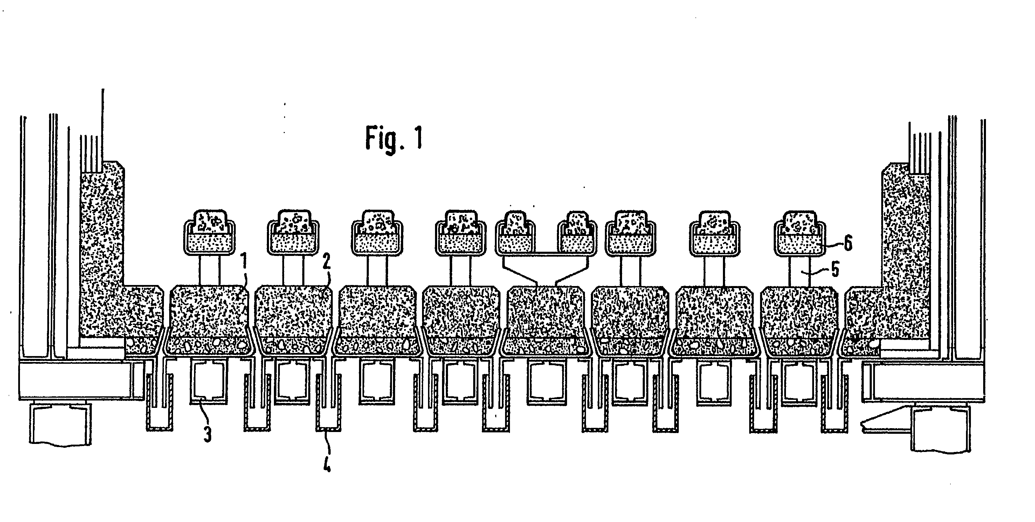

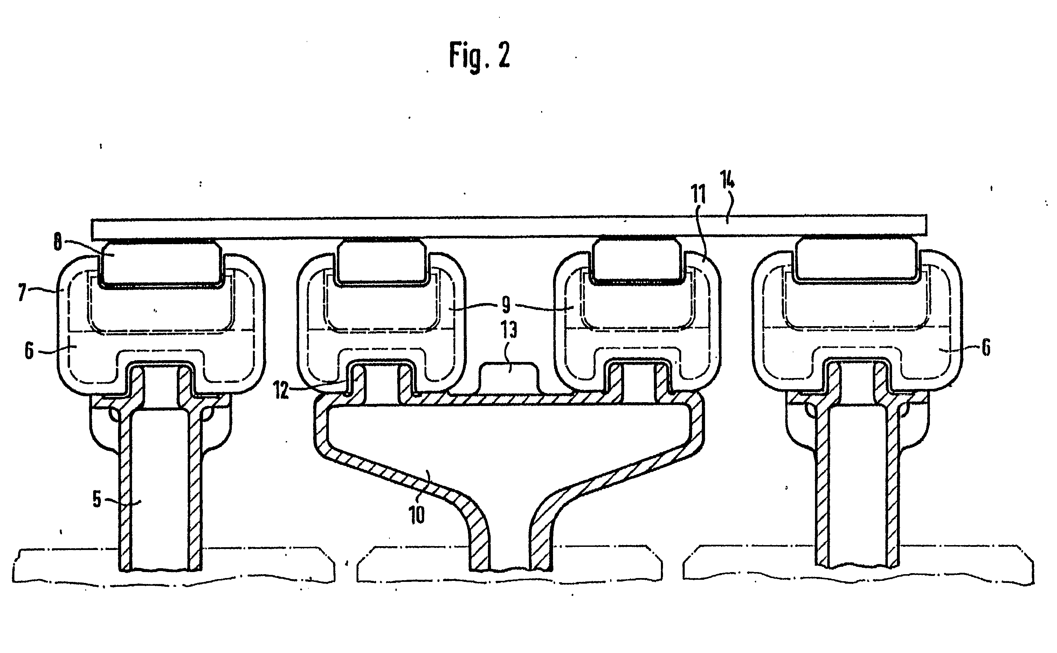

In der Zeichnung ist ein Ausführungsbeispiel des erfindungsgemäßen Industrieofens in der Ausbildung als Gleichschrittofen dargestellt. Es zeigen Figur 1 in vereinfachter Darstellung einen Querschnitt durch den unteren Teil des Gleichschrittofens, Figur 2 einen Teil der Figur 1 in vergrößerter Darstellung.

Der Gleichschrittofen hat eine übliche Unterteilung des Ofenbodens in zwei Gruppen zu je vier abwechselnd nebeneinander liegenden balkenartigen Bodenteilen 1 bzw. 2. Die Bodenteile jeder Gruppe führen gemeinsam eine vertikale und eine in Ofenlängsrichtung horizontale Transportschrittbewegung aus, wozu jedes Bodenteil an seiner Unterseite mit einer mechanischen Bewegungseinrichtung 3 verbunden ist und unter den Bodenteilen eine Mehrzahl von Wassertassen 4 angeordnet ist, mit deren Hilfe die Lücken zwischen den Bodenteilen gasdicht abgeschlossen werden. Jedes Bodenteil 1 bzw. 2 trägt auf einer Stütze 5 einen Transportbalken 6. Die Balkenteilung (Abstand von Balkenmitte zur Balkenmitte) hat beispielsweise das gebräuchliche Maß von 420 mm. Die Transportbalken bestehen üblicherweise aus Gußkörpern 7, die an ihrer Oberseite als Abstützfläche eingesetzte, seitlich von den Gußkörpern eingefaßte Steine 8 enthalten. Die Gußkörper haben zum Beispiel eine gebräuchliche Breite von 240 mm, so daß bei der vorgenannten Balkenteilung zwischen den Gußkörpern zweier benachbarter Balken ein Abstand von 180 mm besteht, durch den eine Wärmebestrahlung der Unterseite eines Bleches durch den Ofenboden stattfinden kann. Während sieben Bodenteile jeweils einen einzigen normalen Transportbalken 6 tragen, ist ein Balken von einer Balkengruppe, der nicht einer der beiden äußersten Transportbalken ist, sondern neben dem auf beiden Seiten ein Nachbarbalken der anderen Balkengruppe liegt und der vorzugsweise neben der Ofenmitte liegt, erfindungsgemäß als Doppelbalken ausgebildet, dessen beide Einzelbalken 9 sowohl zwischen sich wie auch gegenüber den beiden benachbarten Normalbalken einen Abstand aufweisen. Die beiden Einzelbalken 9 des Doppelbalkens ruhen auf einer entsprechend breiter ausgebildeten Stütze 10 des zugehörigen Bodenteils. Zweckmäßigerweise ist der Abstand zwischen den Einzelbalken 9 größer als deren Abstand gegenüber den benachbarten Normalbalken 6. Beispielsweise können die Einzelbalken 9 eine auf 200 mm verringerte Breite ihrer Gußkörper 11 haben und an die benachbarten Normalbalken 6 möglichst nah, bis auf einen freien Abstand von 35 mm herangerückt sein, so daß zusätzlich zu diesen Abständen ein freier Abstand von 130 mm zwischen den beiden Einzelbalken 9 des Doppelbalkens für die sogenannte Unterbeheizung entsteht. Mit diesen Dimensionierungen ist dann der Abstand zwischen der Mitte der beiden Einzelbalken 9 des Doppelbalkens 330 mm und ausreichend groß, um ein schmales Blech 14 nur mit dem Doppelbalken kippsicher tragen und weitertransportieren zu können. Die Breite des Bleches braucht nur so groß zu sein, daß das Blech mit beiden Rändern genügend breit auf den beiden dem Doppelbalken benachbarten Normalbalken 6 aufliegen kann, wofür bei den vorgenannten Balkendimensionen eine Mindestblechbreite von 1000 mm vollkommen ausreichend ist. Für ein gezieltes Auflegen des Bleches auf den Doppelbalken respektive auf die beiden benachbarten Normalbalken kann ein nicht näher dargestellter Anschlag für den einen oder den anderen Rand des aufzulegenden Bleches vorgesehen sein. Die verbreitert ausgebildete Stütze 10 des Doppelbalkens besitzt nockenartige Aufnahmeeinrichtungen 12 zum Fixieren der beiden aufgesetzten Einzelbalken 9. Vorzugsweise besitzt die Stütze 10 dazwischen zusätzliche nockenartige Aufnahmeeinrichtungen 13 zum gleichartigen Fixieren eines nach Abnehmen der Einzelbalken 9 mittig auf die Stütze 10 aufsetzbaren Normalbalkens 6.

**Patentansprüche**

1. Industrieofen für die Wärmebehandlung von Blechen, mit einer Transportvorrichtung aus zwei in Ofenlängsrichtung sich erstreckenden Balkengruppen, deren Balken abwechselnd nebeneinander liegen und mit Seitenabständen voneinander über die Ofenbreite verteilt sind sowie mit einem Höhenabstand vom Ofenboden auf Balkenstützen ruhen, wobei die Balkengruppen vertikale und in Ofenlängsrichtung horizontale Bewegungen relativ zueinander ausführen und abwechselnd das zu transportierende Gut im Abstand über dem Ofenboden tragen und schrittweise vorbewegen, dadurch gekennzeichnet, daß ein Balken von einer Balkengruppe, neben dem auf beiden Seiten ein Nachbarbalken (6) der anderen Balkengruppe liegt, als Doppelbalken ausgebildet ist, dessen beide Einzelbalken (9) zwischen sich sowie gegenüber den beiden Nachbarbalken (6) einen freien Seitenabstand aufweisen und von einer gemeinsamen Balkenstütze (10) getragen sind.

2. Industrieofen nach Anspruch 1, dadurch gekennzeichnet, daß der Seitenabstand zwischen den Einzelbalken (9) größer ist als deren Seitenabstand gegenüber den Nachbarbalken (6).

3. Industrieofen nach Anspruch 1 oder 2, dadurch gekennzeichnet, daß die den Doppelbalken tragende Balkenstütze (10) zwischen den Aufnahmeeinrichtungen (12) zum Fixieren der beiden Einzelbalken (9) zusätzliche Aufnahmeeinrichtungen (13) zum Fixieren eines nach Abnehmen der Einzelbalken (9) mittig auf die Stütze (10) aufsetzbaren Normalbalkens (6) aufweist.

## Claims

1. An industrial furnace for the heat treatment of metal sheets and plates provided with a transfer device comprising two groups of beams arranged in the longitudinal direction of said furnace, the beams thereof being alternately arranged next to each other and spaced across the furnace with a lateral clearance between each other and resting on supports with vertical spacings relative to the furnace floor, said groups of beams moving relative to each other vertically and horizontally in the longitudinal direction of said furnace and carrying alternately the charge to be transferred at a vertical distance from said furnace floor and moving said charge forward in a stepwise mode characterized in that one beam of one such group adjacent to which one beam (6) of the other such group is arranged on either side is a double beam the two individual beams (9) whereof are spaced with a lateral clearance relative to each other and to said two adjacent beams (6) and are carried by a common support (10).

2. An industrial furnace according to claim 1 characterized in that said lateral clearance between said individual beams (9) is larger than their lateral clearance relative to said adjacent beams.

3. An industrial furnace according to claim 1 or 2 characterized in that said support (10) carrying said double beam is, between the holding devices, (12) for arresting said two individual beams (9), provided with further holding devices (13) to arrest an ordinary beam (6) placeable on the centre of said support (10) following the removal of said individual beams (9).

## Revendications

1. Four industriel pour le traitement par la chaleur de tôles avec un dispositif de transport comprenant deux groupes de longerons, dont les longerons sont placés à tour de rôle les uns à côté des autres et se trouvent, avec des espacements latéraux entre-eux, répartis sur la largeur du four en reposant à un distance verticale par rapport à la sole du four sur des supports, les deux groupes pouvant effectuer des mouvements verticaux et, dans le sens de la longueur du four, horizontaux, relativement les uns aux autres, supportant ainsi par alternance la charge à une distance donnée de la sole du four et l'acheminant pas par pas, caractérisé par le fait qu'un de longerons d'un groupe, flanqué de part et d'autre par un longeron de l'autre groupe (6) est conçu comme double longeron dont les deux composants (9) ont entre eux-mêmes et par rapport aux deux longerons voisins (6) un espace latéral libre et reposent sur un support (10) commun.

2. Four industriel selon la revendication 1, caractérisé par le fait que l'espace latéral entre les deux composants du double longeron (9) est plus grand que leur distance par rapport aux longerons voisins (6).

3. Four industriel selon l'une quelconque de revendications 1 ou 2, caractérisé par le fait que le support (10) du double longeron dispose entre les fixations (12) devant recevoir les deux composants du double longeron (9) encore d'autres fixations pour recevoir après enlèvement des deux composants (9) un longeron ordinaire qui sera placé au milieu du support (10).

Fig. 1

# Fig. 2

EP 0 262 424 B1